# EUROPÄISCHE PATENTSCHRIFT

(11) **EP 2 453 557 B1**
(45) Veröffentlichungstag und Bekanntmachung des Hinweises auf die Patenterteilung: **16.11.2022**
(21) Anmeldenummer: 11002127.6
(22) Anmeldetag: 15.03.2011
(51) Int. Cl.: F04D 13/06, H02K 5/128, H02K 5/24

(54) **Nasslaufender Elektromotor und Pumpenaggregat**
Wet-running electric motor and pump assembly
Moteur électrique par voie humide et agrégat de pompes

(30) Priorität: 11.11.2010 DE 102010051916; 11.11.2010 DE 102010051918
(43) Veröffentlichungstag der Anmeldung: 16.05.2012
(73) Patentinhaber: Grundfos Management a/s, 8850 Bjerringbro (DK)
(72) Erfinder: Blaser, Georg, 71679 Asperg (DE)
(74) Vertreter: Patentanwälte Vollmann Hemmer Lindfeld Partnerschaft mbB

(56) Entgegenhaltungen:
- DE-A1- 2 262 867
- DE-A1- 3 436 510
- DE-A1- 19 646 617
- US-A- 2 811 107

## Beschreibung

Die Erfindung betrifft einen nasslaufenden Elektromotor für eine Pumpe mit einem Statorgehäuse, einem in dem Statorgehäuse angeordneten Stator und einem Spaltrohr oder einer Trennkalotte.

Solche nasslaufenden Elektromotoren werden insbesondere in Umwälzpumpen, beispielsweise in Heizungs- oder Brauchwasserumwälzpumpen eingesetzt. In diesen läuft der Rotor im Inneren des Spaltrohrs oder der Trennkalotte in der zu fördernden Flüssigkeit.

Der Stator, in der Regel bestehend aus Eisenteilen und den Eisenteilen angeordneten Spulen, ist zwischen Statorgehäuse und Spaltrohr angeordnet. Dabei ist es wichtig, den Stator möglichst präzise relativ zu dem Spaltrohr und nah am Spaltrohr zu platzieren, um ein möglichst starkes auf den Rotor wirkendes Magnetfeld zu erzeugen.

DE 3436510 A1 offenbart einen elektrischen Antriebsmotor, insbesondere für den Antrieb einer Umwälzpumpe. Dieser elektrische Antriebsmotor weist einen kalottenförmigen Spalttopf zwischen Stator und Rotor auf. An der dem Rotor abgewandten Seite dieses Spalttopfes ist ein Stator angeordnet, welcher als Ganzes durch einen federnden Halter in axialer Richtung mit einer Kraft beaufschlagt ist, um ihn spielfrei an dem Spaltrohr zu fixieren. Bei dieser Anordnung kann bei gegebenen Toleranzen jedoch nicht sichergestellt werden, dass der Stator voll umfänglich vollständig an dem Spalttopf anliegt.

DE 2262867 A1 offenbart einen Elektromotor für ein Pumpenaggregat, welcher ebenfalls einen kalottenförmigen Spalttopf aufweist. In diesem Motor ist ein Fixierring vorgesehen, in welchem die Statorbleche eingebettet sind und durch welchen die Statorbleche im Motorgehäuse fixiert werden.

Es ist Aufgabe der Erfindung, einen nasslaufenden Elektromotor dahingehend zu verbessern, dass der Stator auf einfache Weise präzise nah am Spaltrohr plaziert werden kann.

Diese Aufgabe wird durch einen nasslaufenden Elektromotor mit den in Anspruch 1 angegebenen Merkmalen sowie durch ein Pumpenaggregat gemäß Anspruch 13, welches einen solchen nasslaufenden Elektromotor aufweist, gelöst. Bevorzugte Ausführungsformen ergeben sich aus den Unteransprüchen, der nachfolgenden Beschreibung sowie den beigefügten Figuren.

Erfindungsgemäß weist der nasslaufende Elektromotor, welcher zur Verwendung in einer Pumpe vorgesehen ist, ein Statorgehäuse auf, in dessen Inneren ein Stator angeordnet ist, wobei der Stator ein im Inneren des Stators angeordnetes Spaltrohr umgibt. Unter einem Spaltrohr ist erfindungsgemäß jede Form von Trennelement zu verstehen, welche den Rotorraum von dem Statorraum trennt, so dass der Rotor in der zu fördernden Flüssigkeit laufen kann. Ein solches Trennelement kann beispielsweise auch eine Trennkalotte sein, welche bei einem Kugelmotor Verwendung findet. Im Inneren des Spaltrohrs wird der Rotor platziert. Der Stator kann in bekannter Weise aus Statorblechen mit darauf angeordneten elektrischen Spulen ausgebildet sein. Um den Stator präzise im Inneren des Statorgehäuses und nahe zum Spaltrohr hin platzieren zu können, ist es erfindungsgemäß vorgesehen, dass im Inneren des Statorgehäuses erste elastische Andrückelemente angeordnet sind. Dabei sind diese elastischen Andrückelemente so im Statorgehäuse angeordnet, dass sie zumindest auf Teile des Stators, insbesondere die im Umfangbereich des Spaltrohrs gelegenen Teile des Stators, eine Druckkraft in Richtung des Spaltrohres ausüben. Auf diese Weise können diese Statorteile von den Andrückelementen in Richtung des Stators gedrückt werden. So werden die Teile des Stators bevorzugt von den elastischen Andrückelementen zum einen spielfrei im Inneren des Statorgehäuses gehalten und zum anderen in die Nähe des Spaltrohres, insbesondere in Anlage mit dem Spaltrohr gedrückt. Auf diese Weise können Klappergeräusche aufgrund beweglicher Teile im Inneren des Statorgehäuses vermieden werden und darüber hinaus die Statorpole möglichst nah an das Spaltrohr bewegt werden, um sie auf diese Weise möglichst nah zum Rotor hin zu platzieren und den magnetischen Wirkungsgrad in Zusammenwirkung mit dem Rotor zu optimieren. Die elastischen Andrückelemente ermöglichen dabei eine einfache Montage und sind in der Lage, ein gewisses Spiel bzw. gewisse Toleranzen zwischen Stator, Statorgehäuse und Spaltrohr auszugleichen und eine spiel- und klapperfreie Fixierung des Stators im Inneren des Statorgehäuses zu gewährleisten. So kann auch auf einen Verguss des Statorgehäuses mit dem daran angeordneten Stator verzichtet werden.

Der Stator weist eine Mehrzahl sich axial und parallel zu einer Drehachse des Elektromotors erstreckender Polstege auf. Dabei sind die ersten Andrückelemente dann so angeordnet, dass sie eine Druckkraft auf die Polstege ausüben. So können die Polstege in Richtung des Spaltrohres, d. h. zu dem Spaltrohr hin gedrückt werden, sodass sie möglichst nah zum Spaltrohr, idealerweise in direkter Anlage platziert werden. Die Polstege können sich dabei beispielsweise um ein gewisses Maß verformen. Für jeden Polsteg ist ein erstes Andrückelement vorhanden. D. h. jeder Polsteg wird durch ein eigenes Andrückelement mit einer Drucckraft zu dem Spaltrohr hin beaufschlagt. Es sind beispielsweise bei einem zwölfpoligen Stator zwölf Andrückelemente im Inneren des Statorgehäuses angeordnet bzw. ausgebildet.

Erfindungsgemäss sind die Polstege in radialer Richtung beweglich. Dies ermöglicht es, dass die Polstege durch die Andrückelemente zu dem Spaltrohr hin bewegt werden, so dass sie durch die Andrückelemente in eine gewünschte Endlage bewegt werden und aufgrund der Elastizität der Andrückelemente in dieser Endlage gehalten werden. D. h. die Andrückelemente erzeugen aufgrund ihrer Federwirkung eine konstante Druckkraft auf die Polstege, so dass diese zum Spaltrohr hin gedrückt gehalten werden. Auf diese Weise ist eine spielfreie Fixierung der beweglichen Polstege möglich, ohne dass das Statorgehäuse mit einer Vergussmasse ausgegossen werden müsste.

Die ersten Andrückelemente erzeugen eine radial gerichtete Drucckraft. Dies bringt Vorteile, wenn es sich um ein rohrförmiges oder halbkugelförmiges, d. h. in Form einer Trennkalotte ausgebildetes Spaltrohr handelt und die Polstege dieses Spaltrohr umfänglich umgeben. Durch eine solche radial gerichtete Druckkraft können die Polstege in radialer Richtung zur Außenwandung des Spaltrohres hin gedrückt werden Die ersten Andrückelemente sind als Federzungen ausgebildet, welche bevorzugt einstückig mit dem Statorgehäuse gefertigt sind. Insbesondere wenn das Statorgehäuse aus Kunststoff als Spritzgussteil gefertigt wird, ist es dabei einfach möglich, die Andrückelemente als Federzungen mit dem Statorgehäuse gemeinsam zu spritzen. Auf diese Weise wird eine einfache Fertigung erreicht.

Die Federzungen stehen dabei bevorzugt von der Innenseite des Statorgehäuses, d. h. dessen Innenumfangsfläche schräg zur Rotationsachse bzw. Längsachse des Stators bzw. Statorgehäuses vor. Dabei sind die Federzungen mit einem Längsende an der Innenwandung des Statorgehäuses angelenkt und mit ihrem entgegengesetzten Längsende beabstandet zu der Innenwandung des Statorgehäuses angeordnet, so dass sie in diesem Bereich radial nach außen bewegt werden können und so eine radial nach innen gerichtete elastische Rückstellkraft erzeugen. Die Federzungen sind dabei so konfiguriert, dass in ihrer Ruhelage der von den umfänglich im Inneren des Statorgehäuses verteilten Federzungen umschlossene Durchmesser kleiner als der Aussendurchmesser des einzusetzenden Stators ist. Auf diese Weise wird erreicht, dass der einzusetzende Stator die Federzungen um ein gewisses Maß nach außen drückt, so dass diese dann eine elastische Rückstellkraft erzeugen, welche den Stator bzw. dessen Polstege radial nach innen drücken. Dabei wird die Bewegung der Polstege dann vorzugsweise durch Anlage am Außenumfang des Spaltrohres begrenzt. Bevorzugt sind die Federzungen so angeordnet, dass dasjenige Ende der Federzungen, welches beim Einsetzen des Stators zunächst mit dem Stator in Kontakt kommt, das Ende der Federzungen ist, welches von der Innenwandung des Statorgehäuses beabstandet ist. D. h. wenn der Stator von der einem anzusetzenden Pumpengehäuse abgewandten Seite her in das Statorgehäuse eingesetzt wird, sind die Federzungen mit ihrem dem Pumpengehäuse zugewandten Axialende an der Innenwandung des Statorgehäuses angelenkt. Dabei kann das Statorgehäuse so ausgebildet sein, dass es in bekannter Weise mit seinem einen axialen Ende mit einem Pumpengehäuse, in welchem ein Laufrad einer Pumpe rotiert, verbunden werden kann. Das Laufrad der Pumpe ist drehfest mit dem Rotor des Elektromotors verbunden oder integral mit dem Rotor ausgestaltet.

Weiter bevorzugt sind die ersten Andrückelemente als Rastelemente ausgebildet, welche mit korrespondierenden Rastelementen am Stator oder dessen Polstegen in Eingriff sind. Auf diese Weise wird neben der kraftschlüssigen Fixierung des Stators auch noch eine formschlüssige Fixierung des Stators im Inneren des Statorgehäuses erreicht. Insbesondere greifen die Rastelemente vorzugsweise so in korrespondierende Rastelemente des Stators ein, dass der Stator in axialer Richtung im Inneren des Statorgehäuses gesichert wird.

In einer weiteren bevorzugten Ausführungsform weist der Stator eine Mehrzahl von Polstegen auf, auf welche jeweils eine elektrische Spule aufgesetzt ist, wobei die Spulen weiter bevorzugt jeweils einen Spulenträger aufweisen, welcher mit den Polstegen kraft- und/oder formschlüssig verbunden ist. Die Spulen werden somit bevorzugt durch Rast- oder Klemmelemente auf den Polstegen fixiert. So kann beispielsweise auf den Polstegen eine Ausnehmung vorgesehen sein, in welche die Spulenträger mit einem Rastvorsprung eingreifen, um die Spulenträger und damit die Spulen in axialer Richtung auf den Polstegen zu fixieren. Die Spulen werden bei der Montage dazu gemeinsam mit den Spulenträgern vorzugsweise vom freien Ende her auf die Polstege aufgeschoben. An dem dem freien Ende abgwandten Ende können die Polstege über magnetische Rückschlusselemente verbunden sein, um einen magnetischen Fluss zwischen einzelnen Polstegen zu ermöglichen.

Die einzelnen Statorpole bzw. Statorpolstege sind vorzugsweise gleichmäßig über den Umfang des Spaltrohres verteilt. So können beispielsweise bei Ausgestaltung als dreiphasiger Motor zwölf Polstege vorgesehen sein. Bei einem zweiphasigen Motor können beispielsweise acht Polstege vorgesehen sein.

Gemäß einer weiteren bevorzugten Ausführungsform sind im Inneren des Statorgehäuses zweite Andrückelemente ausgebildet, an welchen die Spulen oder deren Spulenträger jeweils mit ihrer radial äußeren Seite anliegen. Die zweiten Andrückelemente können starr oder aber ebenfalls elastisch ausgebildet sein. Die zweiten Andrückelemente bewirken vorzugsweise, dass die Spulen bzw. deren Spulenträger an den Polstegen an deren radialer Außenseite in Anlage gehalten werden, so dass hier eine Relativbewegung zwischen Spulen und Spulenträger auf der einen Seite und dem Polsteg auf der anderen Seite durch die zweiten Andrückelemente im Betrieb unterbunden werden kann. So werden Klappergeräusche verhindert und Spulen und Spulenträger mit der Oberfläche der Polstege in Anlage gehalten. So ist ein Vergießen oder Verkleben nicht erforderlich. Auch können die Spulenträger mit ausreichend Spiel ausgestattet werden, so dass sie leicht auf die Polstege aufgesetzt werden können.

Bevorzugt sind die zweiten Andrückelemente als radial nach innen vorstehende sich axial an der Innenwandung des Statorgehäuses entlang erstreckende Stege ausgebildet. Diese Stege bewirken, dass die Spulen bzw. Spulenträger über eine größere axiale Länge gedrückt bzw. in Anlage gehalten werden können. Die Stege können sich dabei mit ihrer radialen Innenseite parallel zur Längs- oder Drehachse des Stators erstrecken oder aber zu dieser konisch geneigt sein, so dass sich die von den radial inneren Oberflächen der Stege aufgespannte Querschnittsfläche in Einsetzrichtung des Stators verkleinert. So wird ein einfaches Einsetzen des Stators und in der Endlage eine spielfreie Fixierung aller Elemente des Stators erreicht.

Ferner weist der Stator vorzugsweise eine Leiterplatte auf, über welche die Spulen des Stators elektrisch kontaktiert sind und welche vorzugsweise darüber hinaus elektronische Bauteile einer Motorsteuerung trägt. Die Motorsteuerung kann beispielsweise zur Drehzahleinstellung bzw. -steuerung des Elektromotors ausgebildet sein und dazu einen Frequenzumrichter aufweisen. Es können Teile des Frequenzumrichters dabei auf der Leiterplatte, welche am Stator angeordnet ist, platziert sein. Diese Leiterplatte ist dann vorzugsweise gemeinsam mit dem Stator im Inneren des Statorgehäuses angeordnet. Das Statorgehäuse ist vorzugsweise rohrförmig ausgebildet und wird an einem Axialende von dem sich anschließenden Pumpengehäuse der Pumpe und/oder von dem eingesetzten Spaltrohr verschlossen. Am entgegengesetzten Axialende ist das Statorgehäuse vorzugsweise durch einen Deckel oder einen angesetzten Klemmenkasten verschlossen. In einem solchen Klemmenkasten können weitere elektrische oder elektronische Bauteile, Bedien- und/oder Anzeigeelemente und Anschlusselemente angeordnet sein.

Die Leiterplatte, welche am Stator angeordnet ist bzw. ein Teil des Stators bildet, dient dem elektrischen Anschluss der Spulen, d. h. sie stellt die Verbindung der Spulen zu der Motorsteuerung her. Darüber hinaus ist die erforderliche Verschaltung der Spulen miteinander vorzugsweise auf dieser Leiterplatte ausgebildet. So können einzelne Spulen parallel oder in Reihe geschaltet sein, um gleichzeitig bestromt zu werden. Beispielsweise wenn im Falle eines dreiphasigen Motors zwölf Statorpole mit zwölf Spulen vorgesehen sind, werden immer vier Spulen gleichzeitig bestromt, wobei diese Spulen bevorzugt als zwei Spulepaare ausgebildet sind, welche einander am Spaltrohr diametral gegenüberliegen. Vorzugsweise sind die vier gemeinsam bestromten Spulen elektrisch in Reihe geschaltet.

Zur Fixierung der Leiterplatte liegt diese weiter bevorzugt an Anlageelementen an, welche an den Spulenträgern ausgebildet sind. Die Anlageelemente können sich beispielsweise in axialer Richtung als Anlagestifte von den Spulenträgern erstrecken, wobei die Leiterplatte mit einer Oberfläche an den Enden dieser Anlageelemente bzw. Anlagestifte zur Anlage kommt. Gleichzeitig können an den Spulenträgern elektrische Anschlussstifte bzw. Anschlusskontakte ausgebildet sein, welche zur elektrischen Verbindung mit der Leiterplatte in Öffnungen der Leiterplatte eingreifen. Dort können sie die Leiter auf der Leiterplatte elektrisch kontaktieren, wobei sie mit den Leitern bzw. Leiterbahnen auf der Leiterplatte verlötet sein können. Alternativ können hier Steckkontakte ausgebildet sein. Die Anordnung der Anlageflächen hat den Vorteil, dass die auftretenden Kräfte beim Aufstecken der Leiterplatte auf die Spulenträger nicht von den elektrischen Anschlusskontakten bzw. Anschlussstiften der Spule aufgenommen werden müssen, sondern von der Leiterplatte über die Anlageelemente direkt auf den Spulenträger übertragen werden. Ferner wird so die definierte Anlage für die Leiterplatte geschaffen.

Wie vorangehend beschrieben, ist das Statorgehäuse vorzugsweise mit einem Deckel verschlossen. Gemäß einer bevorzugten Ausführungsform ist der Deckel dabei mit der Leiterplatte kraft- und/oder formschlüssig verbunden. Dies hat den Vorteil, dass der Deckel vor dem Einsetzten des Stators in das Statorgehäuse mit der Leiterplatte und damit dem Stator verbunden werden kann und dann gemeinsam mit dem Stator in das Statorgehäuse eingesetzt werden kann und dann, wenn der Stator vollständig in das Statorgehäuse eingesetzt ist, das Statorgehäuse an dessen Axialseite verschließen kann. Dadurch wird eine sehr einfache Montage erreicht. Ferner werden alle Bauteile des Stators ebenfalls mit dem Deckel verbunden, so dass alle Bauteile aneinander festgelegt sind und im Betrieb keine Klappergeräusche verursachen können. Bevorzugt weist der Deckel einen Durchlass für ein elektrisches Anschlusselement auf. Dieses elektrische Anschlusselement dient der Verbindung mit einer elektrischen Anschlussleitung oder elektronischen oder elektrischen Bauteilen, welche im Inneren eines mit dem Statorgehäuse verbundenen Klemmenkastens oder Elektronikgehäuse angeordnet sind. Dies können beispielsweise Steuer-, Bedien- und/oder Anzeigeelemente sein oder Bauteile, welche der Stromversorgung des Elektromotors dienen. Das elektrische Anschlusselement zur Verbindung der Leiterplatte im Inneren des Stators mit äußeren elektrischen Bauteilen ist dabei vorzugsweise als Steckelement ausgebildet, so dass hier eine einfache Montage durch Zusammenstecken möglich ist.

Gemäß einer weiteren bevorzugten Ausführungsform ist der Deckel mit der Leiterplatte über Rastelemente verbunden. Dies ermöglicht eine sehr einfache Montage ohne Werkzeug. Darüber hinaus ist der Deckel weiter bevorzugt mittels Rastelementen mit dem Statorgehäuse verbunden. Auf diese Weise wird der Deckel nicht nur an dem Stator, d. h. der Leiterplatte, sondern gleichzeitig auch im Statorgehäuse fixiert. So dient der Deckel damit indirekt auch der Fixierung der Leiterplatte und des Stators im Statorgehäuse. Auf diese Weise werden alle Bauteile fest aneinander gehalten und es werden Klappergeräusche im Betrieb vermieden.

Vorzugsweise weist der Deckel zumindest einen sich axial, d. h. parallel zur Längs- bzw. Drehachse des Elektromotors erstreckenden Vorsprung auf, welcher sich durch eine Ausnehmung der Leiterplatte hindurch erstreckt und auf einem Eisenteil des Stators abstützt. So wird, wenn der Deckel auf die Leiterplatte zu deren Verrastung aufgedrückt wird, keine übermäßige Kraft auf die Leiterplatte und die auf diese angeordneten elektrischen oder elektronischen Bauelemente ausgeübt. Stattdessen werden Axialkräfte von dem Deckel direkt auf die Eisenstruktur des Stators übertragen. Dies kommt insbesondere auch dann zum Tragen, wenn der gesamte Stator mit dem vorher mit der Leiterplatte verbundenen Deckel in das Statorgehäuse eingesetzt und eingedrückt wird. Gerade dann folgt so eine Kraftübertragung von dem Deckel direkt auf die Struktur des Stators, ohne dass die Leiterplatte im Kraftfluss liegt. Die Leiterplatte ist vorzugsweise nur im Bereich ihres Außenumfanges mit dem Deckel verrastet. Der Vorsprung kann beispielsweise stiftförmig sein und sich durch ein Loch in der Leiterplatte hindurch erstrecken und auf einem der Polschenkel oder einem Rückschlusselement des Stators abstützen.

Gemäß einer weiteren bevorzugten Ausführungsform der Erfindung ist das Statorgehäuse von einem Verkleidungselement umgeben, welches mit dem Statorgehäuse über Rastelemente verbunden ist. Ein solches Verkleidungselement ist vorzugsweise ebenfalls aus Kunststoff ausgebildet. Ein solches Verkleidungselement kann dazu dienen, eine thermische Isolierung nach außen hin zu bilden. Insbesondere dann, wenn das Spaltrohr an seinem Axialende radial nach außen umgebogen und dort mit dem Umfangsbereich einer axialen Stirnseite des rohrförmigen Statorgehäuses verbunden ist, ist es vorteilhaft, wenn dieser Umfangsbereich, in welchem das Spaltrohr mit dem Statorgehäuse verbunden ist, von einem Verkleidungselement überdeckt wird. So kann nämlich die Berührung mit dem Spaltrohr und damit eine Verbrennungsgefahr verhindert werden. Das Spaltrohr kann, wenn es von der zu fördernden Flüssigkeit im Inneren durchströmt ist, beispielsweise dann, wenn heißes Wasser gefördert wird, sehr heiß werden. Ferner kann das Verkleidungselement eine Überwurfmutter, mittels derer das Statorgehäuse an einem Pumpengehäuse verschraubt werden kann, in axialer Richtung auf dem Statorgehäuse fixieren.

Gegendstand der Erfindung ist neben dem vorangehend beschrieben nasslaufenden Elektromotor auch ein Pumpenaggregat, welches einen solchen nasslaufenden Elektromotor als Antriebsmotor aufweist. Bei diesem Pumpenaggregat handelt es sich insbesondere um ein Umwälzpumpenaggregat, beispielsweise ein Heizungsumwälzpumpenaggregat oder ein Brauchwasserumwälzpumpenaggregat. In diesem Pumpenaggregat kann wie oben beschrieben das Statorgehäuse an einem Axialende mit einem Pumpengehäuse verbunden sein. Dies kann beispielsweise durch eine Überwurfmutter, welche einen radialen Kragen des Statorgehäuse übergreift, geschehen, wobei die Überwurfmutter dann mit einem Gewinde am Pumpengehäuse verschraubt wird. Im Pumpengehäuse läuft ein Laufrad, welches am Rotor des Elektromotors drehfest angebracht ist oder mit dem Rotor als ein integriertes Bauteil ausgebildet ist. Das Spaltrohr kommt mit seinem Axialende dichtend am Pumpengehäuse zur Anlage, wobei zwischen beiden Bauteile eine Dichtung angeordnet sein kann. Das Spaltrohr weist dazu zweckmäßigerweise, wie vorangehend beschrieben, einen radialen Kragen auf, welcher die Verbindung zum Statorgehäuse herstellt und gleichzeitig als Anlagefläche an der Dichtung am Pumpengehäuse dient.

Nachfolgend wird die Erfindung beispielhaft anhand der beigefügten Figuren beschrieben:
- Fig. 1: eine teilweise explodierte geschnittene Ansicht eines erfindungsgemäßen Nasslaufmotors in Verwendung in einem Pumpenaggregat.
- Fig. 2: eine perspektivische Ansicht der Eisenteile des Stators des Elektromotors gemäß Fig. 1,
- Fig. 3: eine Detailansicht eines Spulenträgers,
- Fig. 4: einen Ausschnitt des Stators, welcher die Anbringung der Spulenträger auf den Eisenteilen des Stators zeigt,

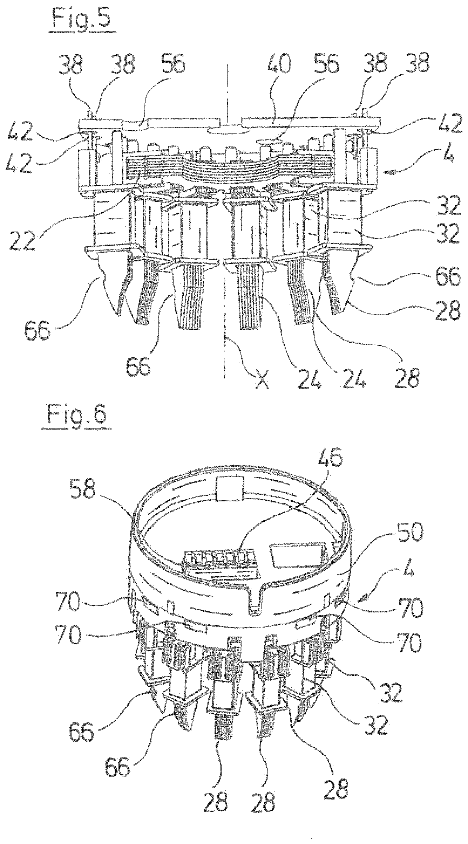

- Fig. 5: eine Schnittansicht des Stators,
- Fig. 6: eine perspektivische Ansicht des Stators gemäß Fig. 5 mit montiertem Deckel,
- Fig. 7: eine perspektivische Ansicht des Statorgehäuses,
- Fig. 8: eine Schnittansicht des Statorgehäuses mit eingesetztem Stator und
- Fig. 9: eine Schnittansicht des Stators mit montiertem Deckel gemäß Fig. 6.

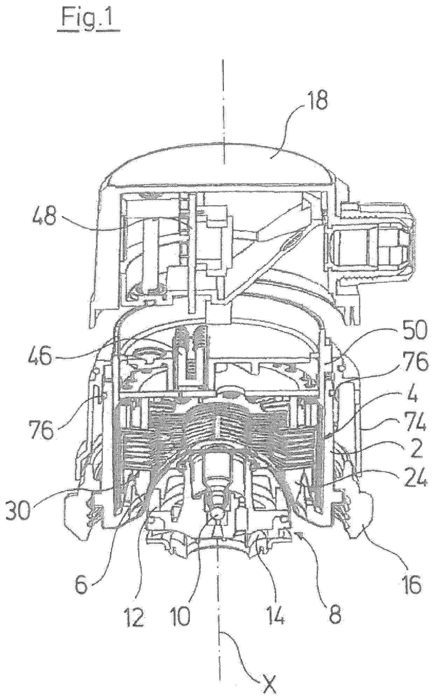

Das hier beschriebene Beispiel zeigt einen nasslaufenden Elektromotor gemäß der Erfindung als Antrieb einer Brauchwasserumwälzpumpe. Fig. 1 zeigt eine Gesamtansicht. Der Motor weist ein Statorgehäuse 2 auf, in welchem ein Stator 4 angeordnet ist. Der Stator 4 umgibt ein Spaltrohr 6 in Form einer Trennkalotte, welches gleichzeitig ein Axialende des Statorgehäuses 2 verschließt. Im Inneren des Spaltrohres 6 ist ein Rotor 8 angeordnet. Bei dem hier gezeigten Beispiel handelt es sich um einen so genannten Kugelmotor, d. h. das Spaltrohr 6 bzw. die Trennkalotte ist halbkugelförmig bzw. kalottenförmig gekrümmt und auch der Rotor weist eine halbkugelförmige Gestalt auf. Der Rotor 8 ist auf einer Lagerkugel 10 gelagert, welche am Spaltrohr 6 abgestützt ist. Dabei erstrecken sich die Kugelform des Rotors 8 und das Spaltrohr 6 konzentrisch zur Oberfläche der Lagerkugel 10. So kann der Rotor 8 zum einen um die Längsachse X rotieren aber auch normal zu dieser um die Kugel 10 pendeln. Der Rotor 8 ist als Permanentmagnetrotor ausgebildet und weist dazu einen Polring 12 auf, in welchem die permanentmagnetischen Pole ausgebildet sind. An dem dem Spaltrohr 6 abgewandten Ende des Rotors 8 ist integral in diesem ein Laufrad 14 ausgebildet, welches in ein hier nicht gezeigtes Pumpengehäuse eingreift. Das Pumpengehäuse wird mit dem Statorgehäuse 2 mittels der Überwurfmutter 16 verbunden. An das dem Pumpengehäuse bzw. dem Rotor 8 abgewandte Axialende des Statorgehäuses 2 ist ein Elektronikgehäuse bzw. ein Klemmenkasten 18 angesetzt.

Der Stator 4 weist ein Eisenteil 20, welches von einer Rückschlussscheibe 22 und zwölf daran angesetzten Polstegen 24 gebildet wird. Polstege 24 und die Rückschlussscheibe 22 sind aus geschichteten Eisenblechen ausgebildet. Die Polstege 24 sind in umfänglichen Ausnehmungen an der Rückschlussscheibe 22 quer zu dieser eingesetzt, so dass sich die Polstege 24 ausgehend von der Rückschlussscheibe in axialer Richtung X zum Spaltrohr 6 hin erstrecken. Polstege 24 sind in die Ausnehmungen 26 am Außenumfang der Rückschlussscheibe 22 eingesetzt und in diesen Ausnehmungen um ein gewisses Maß beweglich, so dass die freien Enden 28 der Polstege 24 in radialer Richtung r bezüglich der Längsachse X beweglich sind. Die Polstege 24 vollführen dabei eine Schwenkbewegung in den Ausnehmungen 26.

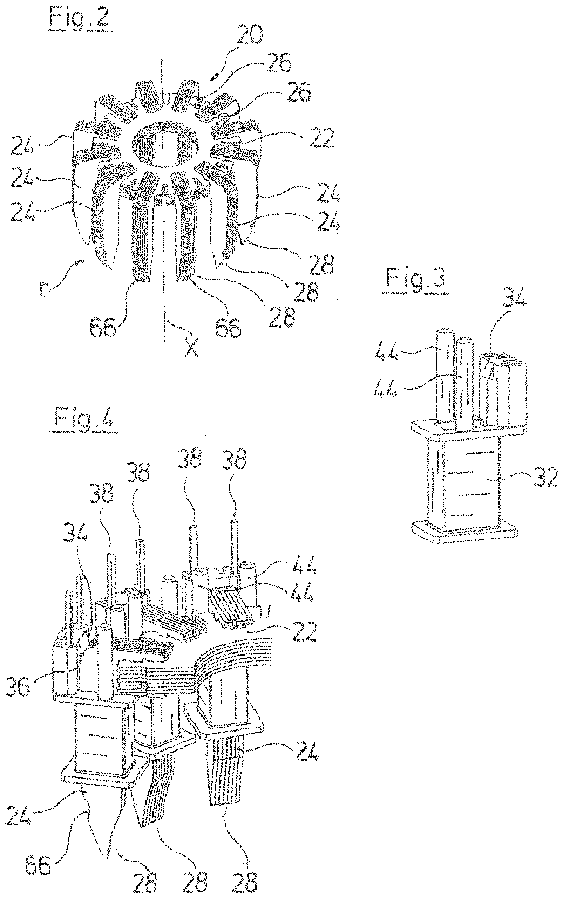

Auf die Polstege 24 ist jeweils eine Spule 30 aufgesetzt. Die Spulen 30 sind jeweils auf einen Spulenträger 32 gewickelt, wie er in Fig. 3 gezeigt ist. Dort ist die Wicklung nicht dargestellt. Die Spulenträger 32 sind aus Kunststoff ausgebildet und werden vom freien Ende 28 her auf die Polstege 24 aufgeschoben, wie in Fig. 4 gezeigt. Dabei hintergreifen die Spulenträger 32 mit einer Rastnase 34 eine Anlageschulter 36 an den Polstegen 24. Auf diese Weise werden die Spulen 30 mit dem Spulenträger 32 formschlüssig in der axialen Richtung auf den Polstegen 24 fixiert. Von dem Spulenträger 32 erstrecken sich in axialer Richtung jeweils zwei Anschlussstifte 38, welche mit der Spulenwicklung verbunden sind und zu deren elektrischen Anschluss dienen. Der elektrische Anschluss der Anschlussstifte 38 erfolgt durch eine Leiterplatte 40, welche axialseitig auf das den freien Enden 28 entgegengesetzte Ende des Stators 4 aufgesetzt ist, wobei die Anschlussstifte 38 Löcher 42 in der Leiterplatte 40 durchgreifen. Die Anschlussstifte 38 sind dann mit Leiterbahnen auf der Leiterplatte 40, welche hier nicht gezeigt ist, beispielsweise durch Löten kontaktiert. Alternativ wäre hier eine elektrische Steckverbindung denkbar. Parallel zu den Anschlussstiften 38 erstrecken sich am selben Axialende stiftförmige Anlageelemente 44 von den Spulenträgern 32. Die axiale Erstreckung der Anlageelemente 44 ist dabei kürzer als diejenige der Anschlussstifte 38. Die Leiterplatte 40 kommt auf den stirnseitigen Enden der Anlageelemente 44 zu liegen, so dass eine Kraftübertragung über die Anschlussstifte 38 bei Druck auf die Leiterplatte 40 vermieden wird. Diese stützt sich vielmehr über die Anlage- ." elemente 44 direkt auf den Spulenträgern 32 ab.

Die Leiterplatte 40 trägt neben den Leiterbahnen zur elektrischen Kontaktierung der Spulen 30 elektrische und elektronische Bauelemente einer Motorsteuerung, beispielsweise eines Frequenzumrichters. An der dem Eisenteil 20 des Stators 4 abgewandten Seite der Leiterplatte 40 ist ein Anschlussstecker 46 angeordnet, welcher dem elektrischen Anschluss der elektronischen Bauelemente auf der Leiterplatte 40 dient. Insbesondere dient der Anschlussstecker 46 der Verbindung mit elektrischen oder elektronischen Bauelementen in dem Klemmenkasten 18. Dazu greift in diesem Ausführungsbeispiels eine Leiterplatte 48, welche in dem Klemmenkasten 18 angeordnet ist, mit einer Stirnkante, an welcher elektrische Kontakte ausgebildet sind, in den Anschlussstecker 46 ein.

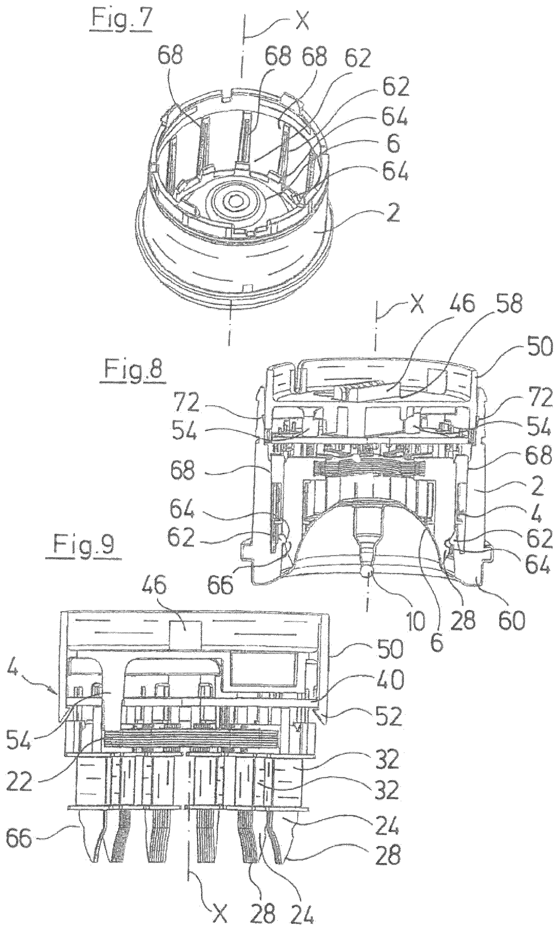

Das Statorgehäuse wird an seiner dem Pumpengehäuse abgewandten Stirnseite durch einen Deckel 50 verschlossen. Zur Montage wird dieser Deckel 50 vor dem Einsetzten des Stators 4 in das Statorgehäuse 2 auf den Stator 4 aufgesetzt. Dabei wird der Deckel 50 mit Rastelementen 52, wie in Fig. 9 gezeigt ist, an der Leiterplatte 40 fixiert. Die Rastelemente 52 sind als Rasthaken ausgebildet und umgreifen die umfängliche Kante der Leiterplatte 40. Der Deckel 50 weist darüber hinaus sich in das Innere des Statorgehäuses 2 erstreckende Vorsprünge 54 auf. Die Vorsprünge 54 sind zusammen mit dem Deckel 50 bevorzugt einstückig aus Kunststoff, beispielsweise im Spritzguss, gefertigt. Die Vorsprünge 54 erstrecken sich durch Löcher 56 in der Leiterplatte 40 hindurch und liegen mit ihrer Stirnseite direkt auf der Rückschlussscheibe 22 an. So stützt sich der Deckel 50 direkt an den Eisenteilen 20, nämlich der Rückschlussscheibe 22 des Stators 4 ab. Das hat den Vorteil, dass wenn der Stator 4 am Deckel 50 ergriffen und in das Statorgehäuse 4 eingesetzt wird, ein auf den Deckel 50 ausgeübter Druck somit direkt auf den Eisenteil 20 des Stators 4 übertragen wird, ohne dass die Platine 40 im Kraftfluss liegt. Der Anschlussstecker 46 erstreckt sich durch eine Öffnung 58 im Deckel 50 nach außen.

Fig. 7 zeigt eine perspektivische Ansicht des Statorgehäuses 2. Dieses ist rohrförmig aus Kunststoff ausgebildet und an einem Axialende durch das Spaltrohr 6 verschlossen. Das Spaltrohr 6 weist dazu einen sich radial nach außen erstreckenden Kragen 60 auf, welcher um das Axialende des rohrförmigen Statorgehäuses 2 gebördelt ist. In seinem Inneren weist das Statorgehäuse 2 das Spaltrohr 6 umgebend erste Andrückelemente in Form von Federzungen auf. Dabei erstrecken sich diese federzungenartigen ersten Andrückelemente 62 von dem an das Spaltrohr 6 angrenzenden Ende des Statorgehäuses 2 in das Innere des Statorgehäuses 2 hinein. Dabei sind die Federzungen radial nach innen geneigt. An ihren freien Enden tragen die ersten Andrückelemente 62 radial nach innen gerichtete Rastvorsprünge 64. Wenn der Stator 4 von dem dem Spaltrohr 6 abgewandten offenen Axialende her in das Statorgehäuse 2 eingesetzt wird, kommen die Rastvorsprünge 64 der ersten Andrückelemente 62 an den Außenseiten der freien Enden 28 der Polstege 24 zur Anlage. Dabei ist für jeden Polsteg 24 ein erstes Andrückelement 62 an entsprechender Position im Inneren des Statorgehäuses 2 ausgebildet. Die ersten Andrückelemente 62 sind dabei so dimensioniert, dass der Innendurchmesser zwischen den radialen Innenseiten der Rastvorsprünge 64 in Ruhelage kleiner als der Außendurchmesser zwischen den radialen Außenseiten der Polstege 24 ist. So drücken die Polstege 24 die ersten Andrückelemente 62 beim Einsetzen um ein gewisses Maß radial nach außen, so dass die Federzungen der ersten Andrückelemente 62 eine radial gerichtete Rückstellkraft erzeugen, welcher ihrerseits die freien Enden 28 der Polstege 24 radial nach innen drücken, bis diese an der Außenseite des Spaltrohres 6 zur Anlage kommen. Dazu sind die Innenflächen der freien Enden 28 Polstege 24 korrespondierend zu dem kalottenförmigen Spaltrohr 6 gekrümmt. In dieser Lage greifen dann die Rastvorsprünge 64 in Rastausnehmungen 66 an der Außenseite der Polstege 24 ein. Dadurch wird der Eisenteil 20 in axialer Richtung X im Inneren des Statorgehäuses 2 fixiert. Durch die oben beschriebene Beweglichkeit der Polstege 24 an der Rückschlussscheibe 22 können diese von den ersten Andrückelementen 62 in Anlage mit der Außenseite des Spaltrohres 6 gehalten werden. Auf diese Weise wird eine spielfreie Fixierung möglich, welche Klappergeräusche vermeidet. Darüber hinaus werden die Polstege 22 in unmittelbaren Kontakt mit dem Spaltrohr 6 gebracht, so dass der Abstand zum Polring 12 des Rotors 8 minimiert wird, um den magnetischen Wirkungsrad zu optimieren.

Im Inneren des Statorgehäuses 2 sind darüber hinaus zweite Andrückelemente 68 in Form von sich parallel zur Längsachse X erstreckenden Stegen ausgebildet, welche radial nach innen von der Innenumfangfläche des Statorgehäuses 2 vorstehen. Diese stegförmigen zweiten Andrückelemente 68 liegen, wie in Fig. 8 gezeigt, an den radialen Außenflächen der Spulenträger 32 an. Dadurch werden die Spulenträger 32 radial nach innen auf die radialen Außenflächen der Polstege 24 gedrückt, so dass auch die Spulenträger 32 spielfrei an den Polstegen 24 anliegen und auch in diesem Bereich keine Klappergeräusche auftreten können.

Der Deckel 50 weist darüber hinaus an seinem Außenumfang Rastelemente in Form von Rastvorsprüngen 70 auf. Diese erstrecken sich vom Außenumfang des Deckels radial nach außen. Diese verrasten mit Ausnehmungen 72 am Innenumfang des Statorgehäuses 2, wenn der Stator 4 in das Statorgehäuse 2 eingesetzt ist. So ist der Stator 4 im Inneren des Statorgehäuses 2 zum einen über die ersten Andrückelemente 62 und deren Rastvorsprünge 64 und über den Deckel 50 mittels der Rastvorsprünge 70 und der Ausnehmungen 72 fixiert. Die Montage erfolgt sehr einfach durch Zusammenstecken und Verrasten. Da die Vorsprünge 54 radial weiter innen liegen als die Rastvorsprünge 70 kann der Deckel 50 zwischen den Rastvorsprüngen 70 und den Vorsprüngen 54 eine gewisse Federwirkung bereitstellen. Diese wird dazu genutzt, den Eisenteil 20 des Stators in axialer Richtung spielfrei im Inneren des Statorgehäuses 2 zu fixieren und auch in axialer Richtung gegen das Spaltrohr 6 zu drücken, so dass hier keine Klappergeräusche auftreten können.

Wie in Fig. 1 zu sehen ist, weist das Statorgehäuse 2 ein Verkleidungselement 74 auf, welches das Statorgehäuse 2 umfänglich und beabstandet umgibt. Dieses Verkleidungselement 74 ist vorzugsweise aus Kunststoff gefertigt und mittels einer Rastverbindung 76 an der Außenseite des Statorgehäuses 2 in axialer Richtung fixiert. D. h. auch das Verkleidungselement 76 kann durch einfaches Aufstecken von dem im Pumpengehäuse abgewandten Ende her an dem Statorgehäuse 2 fixiert werden. Das Verkleidungselement 76 dient der thermischen Isolierung und fixiert die Überwurfmutter 16 in axialer Richtung, so dass diese vom Statorgehäuse 2 nicht abrutschen kann.

### Bezugszeichenliste

- 2 -: Statorgehäuse
- 4 -: Stator
- 6 -: Spaltrohr
- 8 -: Rotor
- 10 -: Lagerkugel
- 12 -: Polring
- 14 -: Laufrad
- 16 -: Überwurfmutter
- 18 -: Klemmenkasten
- 20 -: Eisenteil
- 22 -: Rückschlussscheibe
- 24 -: Polstege
- 26 -: Ausnehmungen
- 28 -: freie Enden
- 30 -: Spulen
- 32 -: Spulenträger
- 36 -: Anlageschulter
- 38 -: Anschlussstifte
- 40 -: Leiterplatte
- 42 -: Löcher
- 44 -: Anlageelemente
- 46 -: Anschlussstecker
- 48 -: Leiterplatte
- 50 -: Deckel
- 52 -: Rastelemente
- 54 -: Vorsprünge
- 56: Löcher
- 58: Öffnung
- 60: Kragen
- 62: erste Andrückelemente
- 64: Rastvorsprünge
- 66: Rastausnehmungen
- 68: zweite Andrückelemente
- 70: Rastvorsprünge
- 72: Ausnehmungen
- 74: Verkleidungselemente
- 76: Rastverbindungen
- X: Längsachse bzw. Rotationsachse
- r: radiale Richtung

## Patentansprüche

1. Nasslaufender Elektromotor für eine Pumpe mit einem Statorgehäuse (2), einem in dem Statorgehäuse (2) angeordneten Stator (4) und einem Spaltrohr (6), wobei der Stator (4) eine Mehrzahl sich axial, parallel zu einer Drehachse (X) des Elektromotors erstreckender Polstege (24) aufweist,
**dadurch gekennzeichnet, dass**
die Polstege (24) in radialer Richtung (r) beweglich sind,
im Inneren des Statorgehäuses (2) elastische erste Andrückelemente (62), welche als Federzungen ausgebildet sind, derart angeordnet sind, dass sie zumindest auf Teile (24) des Stators (4) eine Druckkraft in Richtung des Spaltrohres (6) ausüben,
die ersten Andrückelemente (62) eine radial gerichtete Druckkraft erzeugen und so angeordnet sind, dass sie eine Druckkraft auf die Polstege (24) ausüben, und
für jeden Polsteg (24) ein erstes Andrückelement (62) vorhanden ist.

2. Nasslaufender Elektromotor nach Anspruch 1, **dadurch gekennzeichnet, dass** die ersten Andrückelemente (62) als Federzungen ausgebildet sind, welche einstückig mit dem Statorgehäuse (2) gefertigt sind.

3. Nasslaufender Elektromotor nach Anspruch 1 oder 2, **dadurch gekennzeichnet, dass** die ersten Andrückelemente (62) als Rastelemente (64) ausgebildet sind, welche mit korrespondierenden Rastelementen (66) an dem Stator (4) in Eingriff sind.

4. Nasslaufender Elektromotor nach einem der vorangehenden Ansprüche, **dadurch gekennzeichnet, dass** der Stator (4) eine Mehrzahl von Polstegen (24) aufweist, auf welche jeweils eine elektrische Spule (30) aufgesetzt ist, wobei die Spulen (30) vorzugsweise jeweils einen Spulenträger (32) aufweisen, welcher mit dem Polsteg (24) kraft- und/oder formschlüssig verbunden ist.

5. Nasslaufender Elektromotor nach Anspruch 4, **dadurch gekennzeichnet, dass** im Inneren des Statorgehäuses (2) zweite Andrückelemente (68) ausgebildet sind, an welchen die Spulen (30) oder deren Spulenträger (32) jeweils mit ihrer radial äußeren Seite anliegen.

6. Nasslaufender Elektromotor nach Anspruch 5, **dadurch gekennzeichnet, dass** die zweiten Andrückelemente (68) als radial nach innen vorstehende, sich axial an der Innenwandung des Statorgehäuses (2) entlang erstreckende Stege ausgebildet sind.

7. Nasslaufender Elektromotor nach einem der vorangehenden Ansprüche, **dadurch gekennzeichnet, dass** der Stator (4) eine Leiterplatte (40) aufweist, über welche die Spulen (30) des Stators (4) elektrisch kontaktiert sind und welche vorzugsweise elektronische Bauteile einer Motorsteuerung trägt.

8. Nasslaufender Elektromotor nach Anspruch 7 und einem der Ansprüche 4 bis 6, **dadurch gekennzeichnet, dass** die Leiterplatte (40) an Anlageelementen (44) anliegt, welche an den Spulenträgern (32) ausgebildet sind.

9. Nasslaufender Elektromotor nach Anspruch 7 oder 8, **dadurch gekennzeichnet, dass** das Statorgehäuse (2) mit einem Deckel (50) verschlossen ist, welcher mit der Leiterplatte (40) kraft- und/oder formschlüssig verbunden ist, wobei der Deckel (50) vorzugsweise einen Durchlass (58) für ein elektrisches Anschlusselement (46) aufweist.

10. Nasslaufender Elektromotor nach Anspruch 9, **dadurch gekennzeichnet, dass** der Deckel (50) mit der Leiterplatte (40) und vorzugsweise mit dem Statorgehäuse (2) über Rastelemente (52, 70) verbunden ist.

11. Nasslaufender Elektromotor nach Anspruch 9 oder 10, **dadurch gekennzeichnet, dass** der Deckel (50) zumindest einen sich axial erstreckenden Vorsprung (54) aufweist, welcher sich durch eine Ausnehmung (56) der Leiterplatte (40) hindurch erstreckt und sich auf einem Eisenteil (20) des Stators (4) abstützt.

12. Nasslaufender Elektromotor nach einem der vorangehenden Ansprüche, **dadurch gekennzeichnet, dass** das Statorgehäuse (2) von einem Verkleidungselement (74) umgeben ist, welches mit dem Statorgehäuse (2) über Rastelemente (76) verbunden ist.

13. Pumpenaggregat, insbesondere Umwälzpumpenaggregat, **dadurch gekennzeichnet, dass** es einen nasslaufenden Elektromotor gemäß einem der vorangehenden Ansprüche aufweist.

## Claims

1. A wet-running electric motor for a pump having a stator housing (2), a stator (4) arranged in the stator housing (2) and a can (6), the stator (4) having a plurality of pole webs (24), which extend axially, parallel to a rotational axis (X) of the electric motor,
**characterized in that**
the pole webs (24) are movable in the radial direction (r),
elastic first pressure elements (62), which are constructed as flexible tongues, are arranged in the interior of the stator housing (2) in such a manner, that they exert a compressive force in the direction of the can (6) at least on parts (24) of the stator (4),
the first pressure elements (62) create a radially directed compressive force and are arranged in such a manner that they exert a compressive force onto the pole webs (24), and
one first pressure element (62) is present for each pole web (24).

2. The wet-running electric motor according to Claim 1, **characterized in that** the first pressure elements (62) are constructed as flexible tongues, which are manufactured in one piece with the stator housing (2).

3. The wet-running electric motor according to Claim 1 or 2, **characterized in that** the first pressure elements (62) are constructed as latching elements (64), which are in engagement with corresponding latching elements (66) on the stator (4).

4. The wet-running electric motor according to one of the preceding claims, **characterized in that** the stator (4) has a plurality of pole webs (24), onto which one electric coil (30) is placed in each case, wherein the coils (30) preferably have a coil carrier (32) in each case, which is non-positively and/or positively connected to the pole web (24).

5. The wet-running electric motor according to Claim 4, **characterized in that** second pressure elements (68) are constructed in the interior of the stator housing (2), against which the coils (30) or the coil carriers (32) thereof bear by way of their radially outer side in each case.

6. The wet-running electric motor according to Claim 5, **characterized in that** the second pressure elements (68) are constructed as radially inwardly protruding webs extending axially along on the inner wall of the stator housing (2).

7. The wet-running electric motor according to one of the preceding claims, **characterized in that** the stator (4) has a printed circuit board (40), by means of which the coils (30) of the stator (4) are electrically contacted and which preferably carries electronic components of a motor control.

8. The wet-running electric motor according to Claim 7 and one of Claims 4 to 6, **characterized in that** the printed circuit board (40) bears against contact elements (44), which are constructed on the coil carriers (32).

9. The wet-running electric motor according to Claim 7 or 8, **characterized in that** the stator housing (2) is closed with a cover (50), which is non-positively or positively connected to the printed circuit board (40), wherein the cover (50) preferably has a passage (58) for an electrical connection element (46).

10. The wet-running electric motor according to Claim 9, **characterized in that** the cover (50) is connected to the printed circuit board (40) and preferably to the stator housing (2) by means of latching elements (52, 70).

11. The wet-running electric motor according to Claim 9 or 10, **characterized in that** the cover (50) has at least one axially extending projection (54), which extends through an opening (56) of the printed circuit board (40) and is supported on an iron part (20) of the stator (4).

12. The wet-running electric motor according to one of the preceding claims, **characterized in that** the stator housing (2) is surrounded by a casing element (74), which is connected to the stator housing (2) by means of latching elements (76).

13. A pump assembly, particularly a circulation pump assembly, **characterized in that** it has a wet-running electric motor according to one of the preceding claims.

## Revendications

1. Moteur électrique à fonctionnement en milieu humide pour une pompe, comprenant un boîtier de stator (2), un stator (4) disposé dans le boîtier de stator (2) et une gaine (6), le stator (4) comprenant une pluralité de pièces polaires (24) s'étendant axialement et parallèlement à un axe de rotation (X) du moteur électrique,
**caractérisé en ce que**
les pièces polaires (24) sont mobiles en direction radiale (r),
à l'intérieur du boîtier de stator (2), des premiers éléments d'appui élastiques (62), réalisés sous forme de languettes élastiques, étant disposés de façon qu'ils exercent au moins sur des parties (24) du stator (4) une force de poussée en direction de la gaine (6),
les premiers éléments d'appui (62) engendrent une force de poussée orientée radialement et sont disposés de façon qu'ils exercent une force de poussée sur les pièces polaires (24) et
il y a un premier élément d'appui (62) pour chaque pièce polaire (24).

2. Moteur électrique à fonctionnement en milieu humide selon la revendication 1, **caractérisé en ce que** les premiers éléments d'appui (62) se présentent sous la forme de languettes élastiques réalisées en une seule pièce avec le boîtier de stator (2).

3. Moteur électrique à fonctionnement en milieu humide selon la revendication 1 ou 2, **caractérisé en ce que** les premiers éléments d'appui (62) sont réalisés comme des éléments d'encliquetage (64) qui sont en prise avec des éléments d'encliquetage (66) sur le stator (4).

4. Moteur électrique à fonctionnement en milieu humide selon l'une des revendications précédentes, **caractérisé en ce que** le stator (4) comprend une pluralité de pièces polaires (24) sur chacune desquelles une bobine électrique (30) est positionnée, les bobines (30) comprenant de préférence chacune un support de bobine (32) qui est attaché à la pièce polaire (24) par transmission de force et/ou par complémentarité de forme.

5. Moteur électrique à fonctionnement en milieu humide selon la revendication 4, **caractérisé en ce que**, à l'intérieur du boîtier de stator (2), des deuxièmes éléments d'appui (68) sont formés sur lesquels les bobines (30) ou leurs supports de bobines (32) sont en appui, chacun, par leur côté radialement extérieur.

6. Moteur électrique à fonctionnement en milieu humide selon la revendication 5, **caractérisé en ce que** les deuxièmes éléments d'appui (68) sont réalisés sous la forme de pièces radialement proéminentes vers l'intérieur et s'étendant axialement le long de la paroi intérieure du boîtier de stator (2).

7. Moteur électrique à fonctionnement en milieu humide selon l'une des revendications précédentes, **caractérisé en ce que** le stator (4) comprend un circuit imprimé (40) par le biais duquel les bobines (30) du stator (4) sont électriquement raccordées et qui porte de préférence des composants électroniques d'une commande de moteur.

8. Moteur électrique à fonctionnement en milieu humide selon la revendication 7 et l'une des revendications 4 à 6, **caractérisé en ce que** le circuit imprimé (40) est en appui contre des éléments d'appui (44) qui sont formés sur les supports de bobines (32).

9. Moteur électrique à fonctionnement en milieu humide selon la revendication 7 ou 8, **caractérisé en ce que** le boîtier de stator (2) est fermé par un couvercle (50) qui est attaché au circuit imprimé (40) par transmission de force et/ou par complémentarité de forme, le couvercle (50) comprenant de préférence un passage (58) pour un élément de raccordement électrique (46).

10. Moteur électrique à fonctionnement en milieu humide selon la revendication 9, **caractérisé en ce que** le couvercle (50) est relié au circuit imprimé (40) et de préférence au boîtier de stator (2) par le biais d'éléments d'encliquetage (52, 70).

11. Moteur électrique à fonctionnement en milieu humide selon la revendication 9 ou 10, **caractérisé en ce que** le couvercle (50) comprend au moins une saillie (54) s'étendant axialement qui s'étend à travers un évidement (56) du circuit imprimé (40) et prend appui sur une partie en fer (20) du stator (4).

12. Moteur électrique à fonctionnement en milieu humide selon l'une des revendications précédentes, **caractérisé en ce que** le boîtier de stator (2) est entouré d'un élément d'habillage (74) qui est relié au boîtier de stator (2) par le biais d'éléments d'encliquetage (76).

13. Agrégat de pompes, notamment agrégat de pompes de recirculation, **caractérisé en ce qu'**il comprend un moteur électrique à fonctionnement en milieu humide selon l'une des revendications précédentes.
